# EUROPEAN PATENT SPECIFICATION

(11) **EP 1 574 671 B1**
(45) Date of publication and mention of the grant of the patent: **16.01.2019**
(21) Application number: 05005302.4
(22) Date of filing: 10.03.2005
(51) Int. Cl.: F16J 15/16, F01D 11/02, F16J 15/40, F16J 15/44

(54) **Turbine engine**
Turbinenmotor
Moteur à turbine

(30) Priority: 10.03.2004 US 797452
(43) Date of publication of application: 14.09.2005
(73) Proprietor: Siemens Energy, Inc., Orlando, FL 32826-2399 (US)
(72) Inventor: Baghdadi, Sam, Palm Beach Gardens, FL 33418 (US); Sunshine, Robert W., Hobe Sound, FL 33455 (US)
(74) Representative: Maier, Daniel Oliver

(56) References cited:
- CH-A- 134 451
- FR-A1- 2 481 377
- GB-A- 1 202 216
- US-A- 1 689 735
- US-A- 3 476 396
- US-A- 3 575 523
- US-A- 5 088 889
- US-A- 5 102 298
- US-A- 6 027 306

## Description

### FIELD OF THE INVENTION

This invention is directed generally to turbine engines comprising seals, and more particularly, seals usable between a rotatable body and a hollow body in a turbine engine.

### BACKGROUND

In the art of turbine engine design, the need often exists to seal connections between adjacent turbine components in order to separate fluids and to maintain a turbine's efficiency. More particularly, a seal is often needed to separate high pressure regions from low pressure regions between components whereby one of the components Is stationary and an adjacent component rotates. For instance, a common location for separating high pressure compressor gases and low pressure gases is between a rotor assembly, which rotates, and a stator assembly, which remains relatively stationary during operation of a turbine engine.

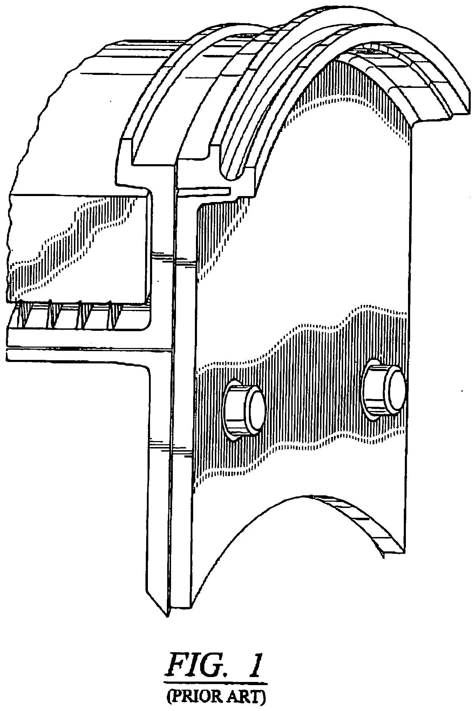

As shown in Figure 1, a conventional seal used between rotatable and stationary components of a turbine engine comprised of a labyrinth seal having a plurality of ridges extending from a rotatable body. The ridges are sized to initially contact the opposing stationary body and to cut grooves into the stationary body. As the rotatable body rotates during use, the ridges simply rotate within the grooves. The ridges prevent some gases, but not all gases, from passing between the gap created between the ridges and the grooves. Thus, the labyrinth seal Is susceptible to leakage and results in inefficiencies in the turbine engine in which the seal is used. Thus, a need exists for a turbine seal capable of sealing openings between rotatable and stationary turbine components.

### SUMMARY OF THE INVENTION

This invention relates to a turbine engine according to claim 1 comprising a seal for sealing a high pressure region of gases from a low pressure region of gases in a turbine engine and particularly, usable between a stationary component of the turbine engine, such as, but not limited to a stator, and a rotatable component of the turbine engine, such as, but not limited to a rotor. The seal may be formed from a plurality of blades extending radially from a rotatable body and generally forming at least one row of blades. The seal may also include a plurality of blades extending radially from a stationary body towards the rotatable body and may generally form at least one row of blades. The plurality of blades extending radially from the stationary body may be positioned proximate to the plurality of blades extending from the rotatable body and aligned in a nonparallel configuration with the plurality of blades extending from the rotatable body.

The blades extending from the rotatable body may be aligned relative to a rotational axis of the rotatable body such that downstream edges of the blades may be advanced relative to upstream edges of the blades in relation to a direction of rotation of the rotatable body. In this configuration, rotation of the rotatable body produces aerodynamic forces opposing the leakage flow, which tend to drive gases toward the blades extending from the stationary body. However, the plurality of blades extending from the stationary body may be aligned generally opposite to the blades extending from the rotatable body. This configuration of blades creates aerodynamic forces opposing the leakage flow; thus, increasing the resistance to leakage and reducing the amount of flow that leaks past the arrangement to any desired level. In at least one embodiment, these aerodynamic forces substantially prevent a gas from passing from a high pressure region to a low pressure region by flowing between the rotatable and stationary bodies. This configuration is advantageous in that the configuration substantially prevents leakage of gases from a high pressure region to a low pressure region without using movable components that are susceptible to wear from contacting adjacent stationary components. In addition, this configuration is advantageous in that the configuration substantially prevents leakage of gases past the seal. These and other embodiments are described in more detail below.

### BRIEF DESCRIPTION OF THE DRAWINGS

The accompanying drawings, which are incorporated in and form a part of the specification, illustrate embodiments of the presently disclosed invention and, together with the description, disclose the principles of the invention.
Figure 1 is a perspective view of a conventional seal usable in a conventional turbine engine.
Figure 2 is a perspective view of a rotor and stationary portions of a turbine engine having a seal with aspects of this invention.

### DETAILED DESCRIPTION OF THE INVENTION

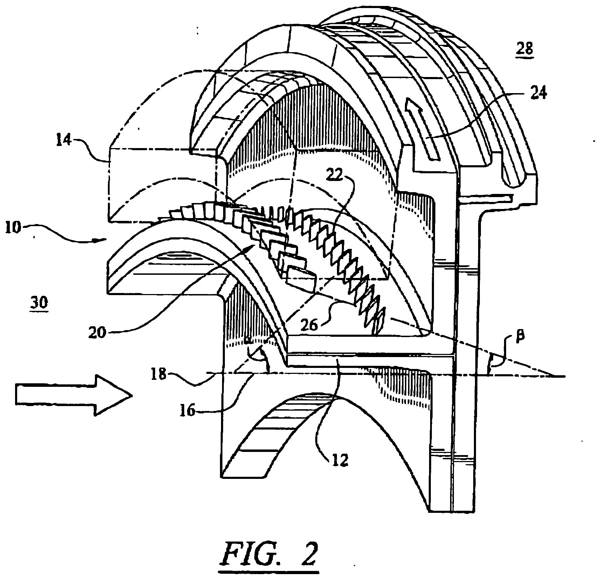

As shown in Figure 2, this invention is directed to a seal 10 usable in turbine engines. The seal 10 may be used to form a seal between a rotatable body 12 and a stationary body 14 in a turbine engine. The seal 10 creates a reverse flow that is counter to the flow from a high pressure region 30 to a low pressure region 28. The reverse flow substantially prevents gases from flowing from the high pressure region 30 of a turbine engine to a low pressure region 28 of the turbine engine between rotatable and stationary components of the turbine engine. In at least one embodiment, the rotatable body 12 may be, but is not limited to, a rotor assembly of a turbine engine, and the stationary body 14 may be, but is not limited to, a stator of a turbine engine. The seal 10 is not limited to being used only between a rotor assembly and a stator, but may be used in other locations in a turbine engine as well. For instance, the seal 10 may be used in turbine vane housings, compressor stator wells, thrust pistons, bearing compartments, shaft seals and any location where labyrinth seals, brush seals, or leaf seals are currently used. In addition, the seal 10 may also be used in other mechanical devices such as steam turbines, rocket engines, etc.

The seal 10 may be formed from a plurality of blades 16 that extend radially from the rotatable body 12. The blades 16 may form one or more rows, as shown in Figure 2. While only a single row of blades 16 is shown in Figure 2, a plurality of rows may be used in other embodiments. The blades 16 may also be aligned at an angle α of between about 1 degrees and about 89 degrees relative to a rotational axis 18 of the rotatable body 12. In at least one embodiment, the blades 16 may be aligned at an angle of about 60 degrees relative to the rotational axis. As shown in Figure 2, the blades 16, in at least one embodiment, may be substantially parallel to each other. The blades 16 may extend to be in close proximity with the stationary body 14. For instance, the blades 16 may extend from the rotatable body 12 to be within about 0.6 millimeters radially from the stationary body 14.

The seal 10 also includes a plurality of blades 20 extending from the stationary body 14 towards the rotatable body 12. The blades 20 may form a single row, as shown in Figure 2, or a plurality of rows. The blades 20 may also be aligned at an angle β of between about 1 degrees and about 89 degrees relative to a rotational axis 18 of the rotatable body 12. In at least one embodiment, the blades 16 may aligned at an angle of about 60 degrees relative to the rotational axis. The angles α and β are measured from the rotational axis 18. However, the blades 16 and 20 are not parallel as the angle α is measured oppositely from the angle β. In at least one embodiment, the plurality of blades 16 may be generally orthogonal to the plurality of blades 20. The blades 20 extend from the stationary body 14 toward the rotatable body 12, and the blades 20 may extend to be about 0.6 millimeters radially from the rotatable body 12. It is desirable to minimize the axial distance between the plurality of stationary and rotating blades 20 and 16 as that tends to minimize the leakage level, which is a typical design goal. However, the seal 10 can be effective even with fairly large axial gaps.

As shown in Figure 2, each blade 16 is positioned on the rotatable body 12 such that a downstream edge 22 of each blade of the plurality of blades 16 is advanced in a direction of rotation, as shown by arrow 24, more than the upstream edges 26 of the blades 20. During operation, the row of blades 16 attached to the rotatable body 12 rotate relative to the rotational axis 18. This motion produces a force in the direction to oppose gas flow from the high pressure region 30 of the turbine engine toward the low pressure region 28. The rotational motion of the rotatable body 12 and the blades 16 produces forces opposing leakage from the high pressure region 30 to the low pressure region 28. Thus, the net flow of air past the seal 10 from the high pressure region 30 to the low pressure region 28 is between about zero to a small amount of flow. The design can be adjusted to allow any desired amount of leakage.

The foregoing is provided for purposes of illustrating, explaining, and describing embodiments of this invention. Modifications and adaptations to these embodiments will be apparent to those skilled in the art and may be made without departing from the scope of the claims.

## Claims

1. A turbine engine including a seal (10), the seal (10) comprising:
a plurality of rotating blades (16) extending radially from a rotatable body (12) and generally forming a row of rotating blades (16), the rotatable body (12) having a rotational axis (18), the rotating blades (16) of the row of rotating blades (16) being spaced apart in the circumferential direction in the turbine engine; and
a plurality of stationary blades (20) extending radially from a stationary body (14) towards the rotatable body (12) and generally forming a row of stationary blades (20), the stationary blades (20) of the row of stationary blades (20) being spaced apart in the circumferential direction in the turbine engine,
wherein the plurality of stationary blades (20) are positioned proximate to the plurality of rotating blades (16) and are nonparallel with the plurality of rotating blades (16),
wherein the plurality of stationary blades (20) are aligned at an angle (β) of between about 1 degree and about 89 degrees relative to the rotational axis (18),
wherein the seal (10) is disposed between low and high pressure gas regions (28, 30) in the turbine engine, the row of rotating blades (16) being disposed between the low pressure gas region (28) and the row of stationary blades (20), the row of stationary blades (20) being disposed between the high pressure gas region (30) and the row of rotating blades (16),
wherein each rotating blade (16) of the row of rotating blades (16) is angled relative to the rotational axis (18) such that a downstream edge (22) of the rotating blade (16) is more advanced in a direction of rotation (24) of the rotatable body (12) than an upstream edge (26) of the rotating blade (16), whereby rotation of the row of rotating blades (16) produces a force which opposes gas leakage from the high pressure gas region (30) to the low pressure gas region (28).

2. The turbine engine of claim 1, wherein the plurality of stationary blades (20) are generally orthogonal to the plurality of rotating blades (16).

3. The turbine engine of claim 1, wherein the plurality of rotating blades (16) are aligned at an angle (α) of between about 1 degree and about 89 degrees relative to the rotational axis (18).

4. The turbine engine of claim 3, wherein the plurality of rotating blades (16) are aligned at an angle (α) of about 60 degrees relative to the rotational axis (18).

5. The turbine engine of claim 1, wherein the plurality of stationary blades (20) are aligned at an angle (β) of about 60 degrees relative to the rotational axis (18).

6. The turbine engine of claim 1, wherein the plurality of rotating blades (16) extend to within about 0.6 millimeters radially from the stationary body (14).

7. The turbine engine of claim 1, wherein the plurality of stationary blades (20) extend to within about 0.6 millimeters radially from the rotatable body (12).

## Patentansprüche

1. Turbine mit einer Dichtung (10), wobei die Dichtung (10) Folgendes umfasst:
mehrere Laufschaufeln (16), die radial von einem drehbaren Körper (12) ausgehen und allgemein eine Reihe von Laufschaufeln (16) bilden, wobei der drehbare Körper (12) eine Rotationsachse (18) aufweist, wobei die Laufschaufeln (16) der Reihe von Laufschaufeln (16) in Umfangsrichtung in der Turbine beabstandet sind, und
mehrere Leitschaufeln (20), die radial von einem feststehenden Körper (14) zu dem drehbaren Körper (12) hin verlaufen und allgemein eine Reihe von Leitschaufeln (20) bilden, wobei die Leitschaufeln (20) der Reihe von Leitschaufeln (20) in Umfangsrichtung in der Turbine beabstandet sind,
wobei die mehreren Leitschaufeln (20) in der Nähe der mehreren Laufschaufeln (16) angeordnet und nicht parallel dazu sind,
wobei die mehreren Leitschaufeln (20) in einem Winkel (β) zwischen etwa 1 Grad und etwa 89 Grad in Bezug zur Rotationsachse (18) ausgerichtet sind,
wobei die Dichtung (10) zwischen einem Niederdruck- und einem Hochdruckgasbereich (28, 30) in der Turbine, die Reihe von Laufschaufeln (16) zwischen dem Niederdruckgasbereich (28) und der Reihe von Leitschaufeln (20) und die Reihe von Leitschaufeln (20) zwischen dem Hochdruckgasbereich (30) und der Reihe von Laufschaufeln (16) angeordnet ist,
wobei jede Laufschaufel (16) der Reihe von Laufschaufeln (16) in Bezug auf die Rotationsachse (18) so abgewinkelt ist, dass eine Hinterkante (22) der Laufschaufel (16) in einer Rotationsrichtung (24) des drehbaren Körpers (12) weiter vorn liegt als eine Vorderkante (26) der Laufschaufel (16), wodurch eine Rotation der Reihe von Laufschaufeln (16) eine Kraft erzeugt, die einem Ausströmen von Gas aus dem Hochdruckgasbereich (30) in den Niederdruckgasbereich (28) entgegenwirkt.

2. Turbine nach Anspruch 1, wobei die mehreren Leitschaufeln (20) allgemein orthogonal zu den mehreren Laufschaufeln (16) verlaufen.

3. Turbine nach Anspruch 1, wobei die mehreren Laufschaufeln (16) in einem Winkel (α) zwischen etwa 1 Grad und etwa 89 Grad in Bezug zur Rotationsachse (18) ausgerichtet sind.

4. Turbine nach Anspruch 3, wobei die mehreren Laufschaufeln (16) in einem Winkel (α) von etwa 60 Grad in Bezug zur Rotationsachse (18) ausgerichtet sind.

5. Turbine nach Anspruch 1, wobei die mehreren Leitschaufeln (20) in einem Winkel (β) von etwa 60 Grad in Bezug zur Rotationsachse (18) ausgerichtet sind.

6. Turbine nach Anspruch 1, wobei die mehreren Laufschaufeln (16) bis zu einem radialen Abstand von etwa 0,6 Millimetern zu dem feststehenden Körper (14) verlaufen.

7. Turbine nach Anspruch 1, wobei die mehreren Leitschaufeln (20) bis zu einem radialen Abstand von etwa 0,6 Millimetern zu dem drehbaren Körper (12) verlaufen.

## Revendications

1. Moteur à turbine comprenant un joint d'étanchéité (10), le joint d'étanchéité (10) comprenant :
une pluralité d'aubes rotatives (16) s'étendant, dans le plan radial, depuis un corps tournant (12) et formant globalement une rangée d'aubes rotatives (16), le corps tournant (12) ayant un axe de rotation (18), les aubes rotatives (16) de la rangée d'aubes rotatives (16) étant espacées les unes par rapport aux autres dans la direction circonférentielle dans le moteur à turbine, et
une pluralité d'aubes fixes (20) s'étendant, dans le plan radial, depuis un corps fixe (14) vers le corps tournant (12) et formant globalement une rangée d'aubes fixes (20), les aubes fixes (20) de la rangée d'aubes fixes (20) étant espacées les unes par rapport aux autres dans la direction circonférentielle dans le moteur à turbine,
étant entendu que la pluralité d'aubes fixes (20) est positionnée à proximité de la pluralité d'aubes rotatives (16) et est non parallèle à la pluralité d'aubes rotatives (16) ;
étant entendu que la pluralité d'aubes fixes (20) est alignée sous un angle (β) faisant entre environ 1 degré et environ 89 degrés par rapport à l'axe de rotation (18) ;
étant entendu que le joint d'étanchéité (10) est disposé dans le moteur à turbine entre des zones de gaz à basse et à haute pression (28, 30), la rangée d'aubes rotatives (16) étant disposée entre la zone (28) de gaz à basse pression et la rangée d'aubes fixes (20), la rangée d'aubes fixes (20) étant disposée entre la zone (30) de gaz à haute pression et la rangée d'aubes rotatives (16) ;
étant entendu que chaque aube rotative (16) de la rangée d'aubes rotatives (16) fait un angle avec l'axe de rotation (18) de telle sorte qu'un bord aval (22) de l'aube rotative (16) soit plus avancé dans un sens de rotation (24) du corps tournant (12) qu'un bord amont (26) de l'aube rotative (16), moyennant quoi la rotation de la rangée d'aubes rotatives (16) produit une force qui s'oppose à la fuite de gaz depuis la zone (30) de gaz à haute pression jusqu'à la zone (28) de gaz à basse pression.

2. Moteur à turbine selon la revendication 1, étant entendu que la pluralité d'aubes fixes (20) est globalement orthogonale à la pluralité d'aubes rotatives (16).

3. Moteur à turbine selon la revendication 1, étant entendu que la pluralité d'aubes rotatives (16) est alignée selon un angle (α) faisant entre environ 1 degré et environ 89 degrés par rapport à l'axe de rotation (18).

4. Moteur à turbine selon la revendication 3, étant entendu que la pluralité d'aubes rotatives (16) est alignée selon un angle (α) d'environ 60 degrés par rapport à l'axe de rotation (18).

5. Moteur à turbine selon la revendication 1, étant entendu que la pluralité d'aubes fixes (20) est alignée selon un angle (β) d'environ 60 degrés par rapport à l'axe de rotation (18).

6. Moteur à turbine selon la revendication 1, étant entendu que la pluralité d'aubes rotatives (16) s'étend, dans le plan radial, jusqu'à environ 0,6 millimètre du corps fixe (14) .

7. Moteur à turbine selon la revendication 1, étant entendu que la pluralité d'aubes fixes (20) s'étend, dans le plan radial, jusqu'à environ 0,6 millimètre du corps rotatif (12) .
